(19) Europäisches Patentamt
European Patent Office
Office européen des brevets

(11) EP 4 474 127 A1

(12) EUROPEAN PATENT APPLICATION
published in accordance with Art. 153(4) EPC

(43) Date of publication:
11.12.2024 Bulletin 2024/50

(51) International Patent Classification (IPC):
B29C 45/16 (2006.01)     B29C 49/06 (2006.01)
B29C 49/22 (2006.01)     B32B 27/00 (2006.01)
B32B 27/08 (2006.01)     B32B 27/32 (2006.01)
B65D 1/00 (2006.01)

(21) Application number: 22924982.6

(52) Cooperative Patent Classification (CPC):
B29C 45/16; B29C 49/06; B29C 49/22;
B32B 27/00; B32B 27/08; B32B 27/32; B65D 1/00

(22) Date of filing: 09.12.2022

(86) International application number:
PCT/JP2022/045481

(87) International publication number:
WO 2023/149078 (10.08.2023 Gazette 2023/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.02.2022 JP 2022015448

(71) Applicant: MITSUBISHI GAS CHEMICAL
COMPANY, INC.
Chiyoda-ku
Tokyo 100-8324 (JP)

(72) Inventors:
• SHIMADA NAKAMURA, Jin
Hiratsuka-shi, Kanagawa 254-0016 (JP)
• ODA, Takafumi
Hiratsuka-shi, Kanagawa 254-0016 (JP)

(74) Representative: Vossius & Partner
Patentanwälte Rechtsanwälte mbB
Siebertstrasse 3
81675 München (DE)

(54) MULTILAYERED CONTAINER, PRODUCTION METHOD FOR TWO-LAYERED PREFORM, AND PRODUCTION METHOD FOR MULTILAYERED CONTAINER

(57)     Provided are: a multilayer container including an outer layer containing a polyolefin resin and an inner layer containing a polyamide resin that is in contact with the outer layer; a method for producing a two-layer preform; and a method for producing a multilayer container. The multilayer container includes a two-color molded article including an outer layer containing a polyolefin resin and an inner layer containing a polyamide resin that is in contact with the outer layer. The polyamide resin includes a xylylenediamine-based polyamide resin containing a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

FIG. 1

## Description

Technical Field

The present invention relates to a multilayer container, a method for producing a two-layer preform, and a method for producing a multilayer container.

Background Art

Canned or bottled foods have been used as methods for preserving foods and pharmaceuticals from the necessity of suppressing deterioration, discoloration, and fading of foods. However, when foods are canned or bottled, they are highly effective in various gas barrier properties against oxygen, water vapor, and other gases, but there are issues that canned or bottled foods cannot be heated in a microwave oven, difficult to take out when serving the inside foods on dishes or the like, and cannot be stacked for disposal after use, as used cans are bulky and lack proper disposal.

An alternative storage container includes a thermoformed container made of a thermoplastic resin, which is widely used. In particular, a container made of a polyolefin resin, particularly a polypropylene resin, has a melting point higher than a retort sterilization treatment temperature, and thus is widely used as a storage container for foods requiring retort treatment. However, while propylene resins are excellent in moisture-proofing, it has a characteristic that allows oxygen to permeate, which causes deterioration, discoloration and fading of foods and chemicals, thereby insufficient as a container for storing foods and chemicals for a long period of time.

As a method for enabling long-term storage of foods and chemicals in a container made of a propylene resin, there is known a method of using a multilayer container in which a thermoplastic resin layer having oxygen barrier properties is employed as an intermediate layer. Specifically, a multilayer container containing a propylene resin layer/an adhesive resin layer/a polyamide resin layer as a gas barrier layer/an adhesive resin layer/a propylene resin layer is disclosed (Patent Document 1).

In addition, Patent Document 2 describes an example of a multilayer container in which a propylene resin layer and a gas barrier layer are in contact with each other without an adhesive resin layer.

Citation List

Patent Documents

Patent Document 1: JP 2009-65923 A
Patent Document 2: WO 2011/038886

Summary of Invention

Technical Problem

Although the multilayer container described in Patent Document 1 is good, it is difficult to provide an adhesive resin layer when the container is molded by injection molding, for example. However, in the absence of an adhesive resin layer, the adhesion between the polyolefin resin layer and the gas barrier layer (polyamide resin layer) becomes an issue. That is, the polyolefin resin and the polyamide resin are different parts, and it is difficult to heat-seal them. In particular, it is difficult to form a multilayer container including a polyolefin resin layer and a polyamide resin layer because of a large difference in glass transition temperature and melting point between the polyolefin resin and the polyamide resin.

Meanwhile, in Patent Document 2, a multilayer container in which a polypropylene resin layer and a polyamide resin layer are in contact with each other is formed by adjusting the melt flow rate of a polypropylene resin. However, the method described in Patent Document 2 has restrictions on the type of polypropylene resin to be used.

An object of the present invention is to provide a multilayer container including an outer layer containing a polyolefin resin and an inner layer containing a polyamide resin and being in contact with the outer layer, a method for producing a two-layer preform, and a method for producing a multilayer container.

Solution to Problem

As a result of studies conducted by the present inventors for the top issues, the present inventors have succeeded in producing a multilayer container including a polyolefin resin layer and a polyamide resin layer that is in contact with the polyolefin resin layer by performing a two-color molding using a xylylenediamine-based polyamide resin as a polyamide resin together with a polyolefin resin, followed by blow molding.

Specifically, the issues described above are solved by the following means.

1. A multilayer container, comprising a two-color molded article comprising an outer layer comprising a polyolefin resin and an inner layer comprising a polyamide resin and being in contact with the outer layer; the polyamide resin including a xylylenediamine-based polyamide resin containing a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

2. The multilayer container according to <1>, wherein a difference between a melting point of the polyolefin resin measured in accordance with differential scanning calorimetry and a melting point of the xylylenediamine-based polyamide resin measured in accordance with differential scanning calorimetry is from 20 to 120°C.

3. The multilayer container according to <1> or <2>, wherein a thickness ratio between the outer layer and the inner layer (outer layer:inner layer) is from 6:4 to 9:1.

4. The multilayer container according to any one of <1> to <3>, wherein the polyolefin resin contains a polypropylene resin.

5. A method for producing a two-layer preform, comprising

performing a two-color molding of an inner layer preform and an outer layer preform by injecting a composition for forming an outer layer comprising a polyolefin resin, between the inner layer preform comprising a polyamide resin and a mold for forming an outer layer preform and positioned outside the inner layer preform,

wherein the polyamide resin includes a xylylenediamine-based polyamide resin containing a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

6. A method for producing a multilayer container,

comprising performing a two-color molding of an inner layer preform and an outer layer preform to produce a two-layer preform by injecting a composition for forming an outer layer and comprising a polyolefin resin, between the inner layer preform and a mold for forming an outer layer preform, the inner layer preform comprising a polyamide resin, and the mold positioned outside the inner layer preform, and further performing a blow molding of the two-layer preform,

wherein the polyamide resin includes a xylylenediamine-based polyamide resin comprising a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

Advantageous Effects of Invention

The present invention made it possible to provide: a multilayer container including a two-color container including an outer layer and an inner layer, the outer layer containing a polyolefin resin, and the inner layer containing a polyamide resin and being in contact with the outer layer; a method for producing a two-layer preform: and a method for producing a multilayer container.

Brief Description of Drawings

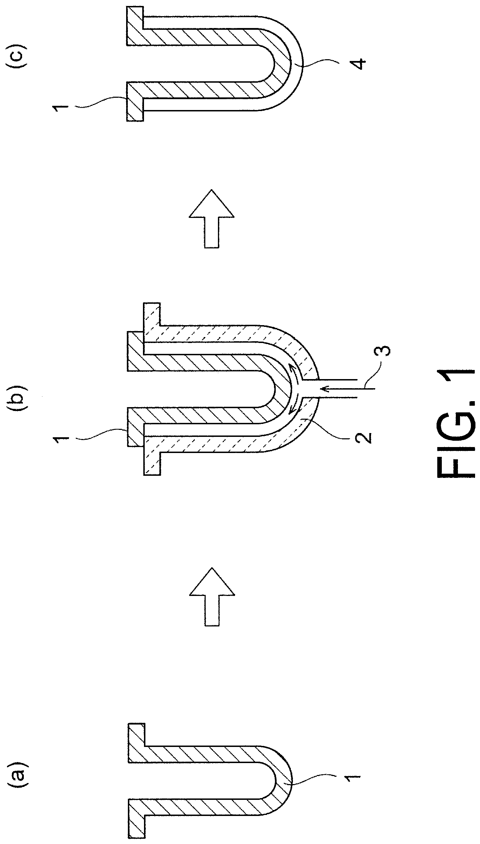

FIG. 1 is a schematic view illustrating a method for producing a two-layer preform in the present embodiment.

Description of Embodiments

Embodiments for carrying out the present invention (hereinafter referred to simply as "the present embodiment") will next be described in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C, unless otherwise noted.

The term "step" in the present specification includes not only an independent step, but also a case in which the desired action of a step is achieved, though the step cannot be clearly differentiated from another step.

When a measurement method described in a standard set forth in the present specification differs depending on the year, it is based on the standard as of January 1, 2021, unless otherwise stated.

A multilayer container according to the present embodiment is characterized by including a two-color molded article including an outer layer containing a polyolefin resin (hereinafter, sometimes simply referred to as a "polyolefin resin layer" or "outer layer") and an inner layer containing a polyamide resin that is in contact with the outer layer (hereinafter, sometimes simply referred to as a "polyamide resin layer" or "inner layer"), in which the polyamide resin includes a xylylenediamine-based polyamide resin containing a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

Although it has been difficult to form a multilayer container having a polyolefin resin layer and a polyamide resin layer in contact with the polyolefin resin layer, in the present embodiment, a multilayer container including a two-layer container is successfully formed by performing a two-color molding. Two-color molding is, for example, unlike insert molding, a technique in which different resins are alternately molded in one cycle to produce one molded article from two types of resins.

Moreover, a multilayer container with excellent oxygen barrier properties can be obtained by using a xylylenediamine-based polyamide resin. In addition, in the multilayer container of the present embodiment, it was possible to reduce the dimensional change rate. This is because the polyolefin resin contained in the polyolefin resin layer inherently has a small water absorption rate and a small dimensional change rate. In the present embodiment, the polyolefin resin layer and the polyamide resin layer are in contact with each other, and therefore the dimensional change of the polyamide resin layer containing a xylylenediamine-based polyamide resin, which inherently has a higher water absorption rate, can also be reduced as well as the polyolefin layer. As a result, it is presumed that the dimensional change rate of the multilayer container was reduced.

<Multilayer Container>

The multilayer container of the present embodiment contains a two-color molded article including an outer layer containing a polyolefin resin, and an inner layer, in contact with the outer layer, containing a polyamide resin.

Also, the multilayer container of the present embodiment may contain a two-color molded article (two-layer container) having one polyolefin resin layer and one polyamide resin layer respectively, but may contain other layer(s) on the inner side or the outer side of the two-color container. Examples of other layer(s) include an oxygen-absorbing layer, an adhesive layer, a gas barrier layer other than the polyamide resin layer, a protective layer, a design layer, and the like. For details thereof, refer to the descriptions in paragraphs [0012] to [0046] of JP 2021-080025 A, the contents of which are incorporated herein by reference. In the present embodiment, other layer(s) is preferably layer(s) except for a polyolefin resin layer and a polyamide resin layer.

An example of the present embodiment includes a two-layer container containing only a two-color molded article containing a polyolefin resin layer and a polyamide resin layer, and another example includes a multilayer container containing the two-color molded article and other layers on the outside and/or the inside thereof.

In the multilayer container of the present embodiment, the polyolefin resin layer and the polyamide resin layer are in contact with each other in the thickness direction in the body portion of the multilayer container, but it is not essential that the polyolefin resin layer and the polyamide resin layer are in contact with each other in all sections of the multilayer container. In particular, there may be sections that are not in contact with each other, such as at the opening of a multilayer container. Generally, 80% or more of the inner surface areas of the outer layer of the multilayer container is in contact with the inner layer (polyamide resin layer).

For example, in the case where the multilayer container is a bottle, an aspect is exemplified in which the polyamide resin layer is included in the body portion of a bottle, but the polyamide resin layer is not included in the vicinity of the opening (mouth plug portion). However, the polyamide resin layer is preferably present up to near the opening of the bottle because such a configuration provides even higher barrier performance.

The multilayer container of the present embodiment is generally a hollow container, and the body portion has a two-layer structure including a polyolefin resin layer and a polyamide resin layer. And generally, a ratio (thickness ratio W:S) of the thickness (W) of the polyolefin resin layer to the thickness (S) of the polyamide resin layer at the body portion is preferably from 6:4 to 9:1. Note that the thickness of the layer means an average thickness. The above thickness ratio (W:S) is more preferably from 6:4 to 8:2, and further more preferably from 6.5:3.5 to 7.5:2.5. With the ratio set to such a range, external volume retention rate during moisture absorption tends to further improve.

The total thickness of the polyolefin resin layer and the polyamide resin layer in the body portion of the multilayer container is preferably 50 $\mu$m or more, more preferably 100 $\mu$m or more, even more preferably from 150 $\mu$m or more, still even more preferably 200 $\mu$m or more, and still further even more preferably 300 $\mu$m or more, still much further even more preferably 400 $\mu$m or more, and may be 500 $\mu$m or more. With the thickness set to equal to or more than the lower limit value, the falling shock resistance of bottles tends to further improve. Also, the total thickness of the polyolefin resin layer and the polyamide resin layer in the body portion of the multilayer container is preferably 5 mm or less, more preferably 3 mm or less, even more preferably 2 mm or less, and may be 1 mm or less, and may also be 700 um or less. With the thickness set to equal to or less than the upper limit value, bottles can be made more lightweight.

The thickness (W) of the polyolefin resin layer in the body portion of the multilayer container is preferably 50 um or more, more preferably 75 $\mu$m or more, and even more preferably 100 $\mu$m or more. With the thickness set to equal to or more than the lower limit value, the dimensional change rate during moisture absorption tends to decrease. In addition, the thickness (W) of the polyolefin resin layer is preferably 2 mm or less, more preferably 1 mm or less, and even more preferably 500 $\mu$m or less. When the multilayer container of the present embodiment has two or more polyolefin resin layers, the thickness of each polyolefin resin layer may the same or different.

The thickness (S) of the polyamide resin layer in the body portion of the multilayer container is preferably 1 $\mu$m or more, more preferably 3 $\mu$m or more, and still more preferably 10 $\mu$m or more. With the thickness set to equal to or more than the lower limit value, the gas barrier properties tend to improve. The thickness (S) of the polyamide resin layer is preferably 200 $\mu$m or less, more preferably 150 $\mu$m or less, and still more preferably 100 $\mu$m or less. With the thickness set to equal to or less than the upper limit value, the dimensional change during moisture absorption tends to decrease.

The mass of the polyamide resin layer in the multilayer container (in particular, a bottle) of the present embodiment is preferably from 1 to 40 mass%, more preferably from 2 to 35 mass%, and particularly preferably from 3 to 30 mass%, relative to the total mass of the multilayer container. With the mass of the polyamide resin layer set within the above range, a multilayer container having good gas barrier properties can be obtained.

The volume of the multilayer container is not particularly limited, but from the viewpoint of the oxygen barrier properties and production, the volume of the multilayer container is preferably 30 mL or more, more preferably 50 mL or more, even more preferably 100 mL or more, still even more preferably 200 mL or more, and yet still even more preferably 250 mL or more, or the volume of the multilayer container is preferably 3000 mL or less, more preferably 2000 mL or less, even more preferably 1500 mL or less, still even more preferably 1000 mL or less, and yet still even more preferably 600 mL or less.

The multilayer container of the present embodiment is preferably excellent in oxygen barrier properties as described above.

Specifically, the multilayer container of the present embodiment has the oxygen transmittance rate of, preferably $8.0 \times 10^{-2}$ cc/(pkg·day) or less, more preferably $9.0 \times 10^{-3}$ cc/(pkg·day) or less, and still more preferably $5.0 \times 10^{-3}$ cc/(pkg·day) or less. The oxygen transmission rate is achieved, for example, by using a polyamide resin having excellent oxygen barrier properties for the polyamide resin layer. It is ideal that the lower limit value is 0 cc/(pkg·day); however, even if the lower limit value is $1.0 \times 10^{-3}$ cc/(pkg·day) or more, it still adequately satisfies required performances. Such excellent oxygen barrier properties are achieved by using a xylylenediamine-based polyamide resin. The oxygen transmission rate is measured in accordance with the descriptions of Examples which will be described later.

Next, the details of the outer layer (polyolefin resin layer) containing a polyolefin resin in the present embodiment will be described.

The polyolefin resin used in the present embodiment is not particularly defined, and a known polyolefin resin can be used. Specific examples of the polyolefin resin include the polyolefin resins described in paragraphs [0101] to [0103] of JP 2014-068767 A, the contents of which are incorporated herein.

The polyolefin resin used in the present embodiment may be an acid-modified polyolefin resin (for example, a maleic anhydride polyolefin resin) or an acid-unmodified polyolefin resin, but an acid-unmodified polyolefin resin is preferable. An acid-unmodified polyolefin resin means that the acid number measured in accordance with the method of titrating polyolefin resin is 2.0 mass% or less of the acid modification rate, preferably 1.0 mass% or less, more preferably 0.5 mass% or less, still more preferably 0.1 mass% or less, and may also be 0.01 mass% or less.

The polyolefin resin is preferably at least one type selected from the group consisting of a cycloolefin resin and a polypropylene resin, and, more preferably, a propylene resin (PP). The cycloolefin resin may be a cycloolefin homopolymer (COP) or a cycloolefin copolymer (COC).

COP is, for example, a polymer in which norbornene is subjected to ring-opening polymerization and hydrogenation. COP is described, for example, in JP H5-317411 A, and is commercially available as ZEONEX (trade name) or ZEONOR (trade name) available from Zeon Corporation, or as Daikyo Resin CZ (trade name) available from Daikyo Seiko, LTD.

Examples of the COC include copolymers made from olefins such as norbornene and ethylene as raw materials, and copolymers made from olefins such as tetracyclododecene and ethylene as raw materials. COC is commercially available as, for example, Apel (trade name), available from Mitsui Chemicals, Inc.

A known type of PP can be used. Specific examples of the PP include homopolypropylene, propylene-ethylene random copolymer, propylene-ethylene block copolymer, due to its chemical structure.

The polyolefin resin used in the present embodiment has its melting point as measured in accordance with differential scanning calorimetry of preferably 100 °C or higher, more preferably 105 °C or higher, even more preferably 110 °C or higher, still even more preferably 120 °C or higher, and yet more preferably 130°C or higher. The melting point of the polyolefin resin is preferably 180 °C or lower, more preferably 175 °C or lower, even more preferably 170 °C or lower, still even more preferably 165 °C or lower, yet even more preferably 160 °C or lower, and moreover, may be 150 °C or lower, 145 °C or lower, 140 °C or lower, and 135 °C or lower.

The melting point is measured in accordance with descriptions in the Examples below.

When the polyolefin resin layer in the present embodiment includes two or more types of polyolefin resins, the melting point of the polyolefin resin is a value obtained by multiplying the melting point of the respective polyolefin resins by the mass fraction.

The polyolefin resins used in the present embodiment preferably have a melt flow rate (MFR) of 250 g/10 min or less, measured under the condition of 230°C, 2.16 kgf in accordance with ASTM D1238. Even when a polyolefin resin having a MFR of 250 g/10 min or less, which is a polyolefin resin for general purposes, is used, the present embodiment is advantageous in that a multilayer container including a polyamide resin layer and a polyolefin resin layer which are in contact with each other can be molded. Also, the lower limit of the MFR of the polyolefin resin is preferably 10 g/10 min or more.

When the polyolefin resin layer in the present embodiment contains two or more types of polyolefin resins, the MFR of the polyolefin resins is a MFR of the mixture.

The content of the polyolefin resin (preferably polypropylene resin) in the polyolefin resin layer is preferably 90 mass% of the resin layer or more, more preferably 95 mass% or more, and even more preferably 98 mass% or more, and it may be 99 mass% or more of the polyolefin resin layer. The upper limit value of the content may be 100 mass%.

The polyolefin resin layer in the present embodiment may contain only one type, or two or more types of polyolefin resins. When two or more types are contained, the total amount thereof preferably falls within the above range.

The polyolefin resin layer may contain other components in addition to the polyolefin resin. Examples of the other components include resins other than the polyolefin resin, thermal stabilizers, photostabilizers, moisture-proofing agents, waterproofing agents, lubricants, spreading agents, pigments, and dyes.

The polyolefin resin layer may contain only one type, or two or more types of the above-described components. These components are preferably blended at a ratio of 10 parts by mass or less of the components to 100 parts by mass of the polyolefin resin.

Next, the details of the inner layer (polyamide resin layer) containing a polyamide resin in the present embodiment will be described.

The polyamide resin used in the present embodiment includes a xylylenediamine-based polyamide resin containing a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms. By using a xylylenediamine-based polyamide resin, a multilayer container having more excellent gas barrier properties can be provided.

More preferably 75 mol% or more, still more preferably 80 mol% or more, even more preferably 85 mol% or more, even still more preferably 90 mol% or more, yet even still more preferably 95 mol% or more, and particularly even more preferably 97 mol% of the diamine-derived structural units of the xylylenediamine-based polyamide resin are derived from m-xylylenediamine and/or p-xylylenediamine.

In the present embodiment, a ratio between m-xylylenediamine and p-xylylenediamine is preferably 0 to 90 mol% of p-xylylenediamine relative to 10 to 100 mol% of m-xylylenediamine, more preferably 0 to 70 mol% of p-xylylenediamine relative to 30 to 100 mol% of m-xylylenediamine, still more preferably 0 to 30 mol% of p-xylylenediamine relative to 70 to 100 mol% of m-xylylenediamine, even still more preferably 0 to 10 mol% of p-xylylenediamine relative to 90 to 100 mol% of m-xylylenediamine, and yet even still more preferably 0 to 2 mol% of p-xylylenediamine relative to 98 to 100 mol% of m-xylylenediamine. When the value is set to the above range, the gas barrier properties tend to further improve.

Examples of the diamine that can be used as a raw material diamine component of the xylylenediamine-based polyamide resin, other than m-xylylenediamine and p-xylylenediamine, include aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl) methane, 2,2-bis(4-aminocyclohexyl)propane, bis(aminomethyl)decalin, and bis(aminomethyl)tricyclodecane; and diamines having an aromatic ring, such as bis(4-aminophenyl)ether, p-phenylenediamine, and bis(aminomethyl)naphthalene. One of these can be used alone, or two or more can be mixed and used.

More preferably 75 mol% or more, still more preferably 80 mol% or more, even more preferably 90 mol% or more, even still more preferably 95 mol% or more, yet even still more preferably 98 mol% or more, and particularly even still more preferably 99.9 mol% or more of the dicarboxylic acid-derived structural units of the xylylenediamine-based polyamide resin are derived from an $\alpha,\omega$-linear aliphatic dicarboxylic acid having from 4 to 20 carbon atoms.

Examples of the $\alpha,\omega$-linear aliphatic dicarboxylic acid having from 4 to 20 carbon atoms that is preferably used as the raw material dicarboxylic acid component of the xylylenediamine-based polyamide resin include aliphatic dicarboxylic acids, such as succinic acid, glutaric acid, pimelic acid, suberic acid, azelaic acid, adipic acid, sebacic acid, undecanedioic acid, and dodecanedioic acid. Among these, one type, or a mixture of two or more types may be used, but adipic acid and/or sebacic acid is more preferable, and adipic acid is more preferable because a melting point of the polyamide resin is in an appropriate range for molding.

Examples of the dicarboxylic acid component other than the $\alpha,\omega$-linear aliphatic dicarboxylic acid having from 4 to 20 carbon atoms include phthalic acid compounds, such as isophthalic acid, terephthalic acid, and orthophthalic acid; and naphthalenedicarboxylic acid isomers, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type, or a mixture of two or more types may be used. In particular, isophthalic acid is exemplified as the dicarboxylic acid component other than the $\alpha,\omega$-linear aliphatic dicarboxylic acid having 4 to 20 carbon atoms.

In the xylylenediamine-based polyamide resin of the present embodiment, 70 mol% or more (more preferably 75 mol% or more, still more preferably 80 mol% or more, even still more preferably 90 mol% or more, yet even still more preferably 95 mol% or more, and yet even still more preferably 98 mol% or more) of the diamine-derived structural units are preferably derived from m-xylylenediamine, and 70 mol% or more (more preferably 75 mol% or more, still more preferably 80 mol% or more, even still more preferably 90 mol% or more, yet even still more preferably 95 mol% or more, and yet even still more preferably 98 mol% or more) of the dicarboxylic acid-derived structural units are preferably derived from adipic acid and/or sebacic acid (preferably, adipic acid), particularly.

The xylylenediamine-based polyamide resin may be modified with isophthalic acid. For example, a case where from 1 to 10 mol% of the dicarboxylic acid-derived structural units are structural units derived from isophthalic acid is exemplified.

The xylylenediamine-based polyamide resin used in the present embodiment includes a diamine-derived structural unit and a dicarboxylic acid-derived structural unit as main components, but structural units other than these are not entirely excluded. Of course, the xylylenediamine-based polyamide resin may contain a structural unit derived from a lactam such as $\varepsilon$-caprolactam or laurolactam, or from an aliphatic aminocarboxylic acid such as aminocaproic acid or aminoundecanoic acid. As used herein, the term "main components" indicates that, of the structural units constituting the xylylenediamine-based polyamide resin, the total number of the diamine-derived structural units and the dicarboxylic acid-derived structural units is the largest among all the structural units. In the present embodiment, the total of the diamine-derived structural units and the dicarboxylic acid-derived structural units in the xylylenediamine-based polyamide resin preferably accounts for 90 mass% or more, more preferably 95 mass% or more, and may account for 98 mass% or more, of all the structural units.

As a method for producing the xylylenediamine-based polyamide resin, a known method can be employed. For example, reference can be made to the descriptions in paragraph [0041] to [0043] of WO 2017/057463, the contents of which are incorporated herein.

The number average molecular weight of the xylylenediamine-based polyamide resin used in the present embodiment is selected, as appropriate, according to the application and molding method of the multilayer container, but is preferably from 10000 to 60000, and more preferably from 11000 to 50000 from the viewpoint of moldability and strength of the multilayer container.

The number average molecular weight can be measured in accordance with the description in paragraph [0047] of JP 2018-165298 A, the content of which is incorporated herein.

The xylylenediamine-based polyamide resin used in the present embodiment has its melting point of preferably 160 °C or higher, more preferably 170 °C or higher, even more preferably 175 °C or higher, still even more preferably 180 °C or higher, and yet more preferably 185°C or higher, as measured in accordance with differential scanning calorimetry. The xylylenediamine-based polyamide resin has its melting point of preferably 300 °C or lower, more preferably 290 °C or lower, even more preferably 285 °C or lower, yet even more preferably 280 °C or lower, and still even more preferably 270 °C or lower.

The melting point is measured in accordance with descriptions in the Examples below.

When the polyamide resin layer in the present embodiment contains two or more types of xylylenediamine-based polyamide resins, the melting point of the xylylenediamine-based polyamide resin is a value obtained by multiplying the melting point of each of the xylylenediamine-based polyamide resins by the mass fraction.

In addition, in the multilayer container of the present embodiment, a difference between a melting point of the polyolefin resin as measured in accordance with differential scanning calorimetry and a melting point of the xylylenediamine-based polyamide resin as measured in accordance with differential scanning calorimetry (absolute value; generally, xylylenediamine-based polyamide resin - polyolefin resin) is preferably 20 to 120 °C, and more preferably 50 to 120 °C.

A relative viscosity of the xylylenediamine-based polyamide resin used in the present embodiment is preferably 1.9 or more, more preferably 2.0 or more, even more preferably 2.1 or more, and still even more preferably 2.2 or more. Furthermore, the relative viscosity of the xylylenediamine-based polyamide resin is preferably 2.7 or lower, more preferably 2.6 or lower, even more preferably 2.5 or lower, and may be 2.3 or lower.

The relative viscosity of the xylylenediamine-based polyamide resin used in the present embodiment is the ratio between the falling time (t) as measured at 25°C. by a Cannon-Fenske viscosimeter after dissolving 0.2 g of xylylenediamine-based polyamide resin in 20 mL of 96% sulfuric acid and the falling time (t0) of 96% sulfuric acid itself as measured in the same manner and is represented by the following formula:

$$\text{Relative Viscosity} = t/t0$$

In the case where the polyamide resin layer in the present embodiment includes two or more types of xylylenediamine-based polyamide resins, the relative viscosity of the mixture is used.

The content of the xylylenediamine-based polyamide resin contained in the polyamide resin layer in the present embodiment is preferably 30 mass% or more, more preferably 50 mass% or more, even more preferably 70 mass% or more, still even more preferably 90 mass% or more, yet still even more preferably 95 mass% or more, yet still even more preferably 98 mass%, and may be 99 mass% or more, based on the polyamide resin layer. With the content set to equal to or less than the lower limit value, the barrier properties tend to further improve. The upper limit of the content of the polyamide resin is not particularly limited, but may be 100 mass%, for example, and may be 99.9 mass% or less.

In the present embodiment, the polyamide resin layer may contain polyamide resins other than xylylenediamine-based polyamide resin, and the components other than polyamide resin. The components other than the polyamide resin, specifically, include a thermoplastic resin other than the polyamide resins, an oxidation accelerator, a yellowing inhibitor, an oxygen absorber, a heat stabilizer, a light stabilizer, a moisture-proof agent, a water-proof agent, a lubricant (calcium stearate or the like), a spreading agent, and the like. Reference can be made to the descriptions in paragraph [0061] to [0070] of WO 2021/177126, the contents of which are incorporated herein.

The polyamide resin other than the xylylenediamine-based polyamide resin may be an aliphatic polyamide resin or a semi-aromatic polyamide resin, or may be a mixture of an aliphatic polyamide resin and a semi-aromatic polyamide resin, and preferably includes at least a semi-aromatic polyamide resin. For example, for the polyamide resin, reference can be made to the disclosures in paragraphs [0011] to [0013] of JP 2011-132550 A, the contents of which are incorporated herein.

Examples of the aliphatic polyamide resin include polyamide 6 and polyamide 66, and polyamide 66 is preferable.

Examples of the semi-aromatic polyamide resin include terephthalic acid-based polyamide resins (polyamide 6T, polyamide 9T, polyamide 10T), terephthalic acid- and isophthalic acid-based polyamide resins (polyamide 6T/6I, polyamide 9T/9I, polyamide 10T/10I).

The polyamide resin layer may contain only one type of polyamide resin or may contain two or more types of polyamide resins, other than the xylylenediamine-based polyamide resin. The polyamide resin other than the xylylenediamine-based polyamide resin is preferably blended at a ratio of 10 parts by mass or less with respect to 100 parts by mass of the xylylenediamine-based polyamide resin.

Next, the mode of use of the multilayer container according to the present embodiment will be described.

The shape of the multilayer container of the present embodiment is not particularly limited, and, for example, includes molded containers such as bottles and cups, and bottles are preferred.

The target content to be stored in the multilayer container of the present embodiment is not particularly limited. Examples include food products, cosmetics, pharmaceuticals, toiletries, mechanical, electrical and electronic components, oils, and resins.

Examples of the food products include processed fishery products, processed livestock products, rice, and liquid foods. It is particularly suitable for storing foods that are easily affected by oxygen. For details thereof, refer to the descriptions in paragraphs [0032] to [0035] of JP 2011-037199 A, the contents of which are incorporated herein. Specific examples of the food products include beverages such as vegetable juice, fruit juice, teas, coffee and coffee beverages, milk and milk beverages, mineral water, ionic beverages, alcoholic beverages, fermented milk beverages, and soy milk; gel foods such as tofu, egg tofu, jellies, puddings, soft adzuki-bean jelly, mousse, yogurts, an almond tofu; seasonings such as sauces, soy sauce, ketchup, noodle soup bases, Japanese sauces, vinegar, mirin, dressings, jams, mayonnaise, miso, pickle bases, and grated spices; processed meat products such as salami, ham, sausage, grilled chicken, meatballs, hamburger, grilled pork, and beef jerky; processed fishery products such as steamed fish paste, boiled shellfish, fish boiled in broth, and heated tubular fish-pastes; processed rice products such as rice gruel, cooked rice, rice casserole, and Sekihan steamed rice with red beans; sauces such as meat sauce, mapo sauce, pasta sauce, curry, stews, and hash sauce; processed milk products such as cheese, butter, cream, and condensed milk; processed egg products such as boiled eggs and soft boiled eggs; vegetables boiled in broth and boiled beans; side dishes such as fried foods, steamed foods, stir-fried food, boiled foods, and baked foods; Japanese pickled vegetables; noodles and pastas such as udon, soba, and spaghetti; and fruit preserved in syrups.

Depending on the target content to be stored, the multilayer container may be disinfected or sterilized using ultraviolet rays, electron beams, gamma rays, X-rays, and the like.

Next, the method for producing a two-layer preform of the present embodiment will be described.

A method for producing a two-layer preform of the present embodiment includes performing a two-color molding of an inner layer preform and an outer layer preform by injecting a composition for forming an outer layer, the composition comprising a polyolefin resin, between an inner layer preform and a mold for forming an outer layer preform, the inner layer preform comprising a polyamide resin, and the mold positioned outside the inner layer preform, in which the polyamide resin includes a xylylenediamine-based polyamide resin containing a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms. By performing a two-color molding in this manner, a multilayer container containing a two-color molded article in which a polyamide resin layer and a polyolefin resin layer are in contact with each other can be produced.

The method for producing the two-layer preform will be described in more detail with reference to FIG. 1.

In the embodiment illustrated in FIG. 1, an inner layer preform 1 including a polyamide resin is used (FIG. 1 (a)). The inner layer preform 1 is preferably formed from a composition for forming an inner layer containing a polyamide resin. The inner layer preform 1 is a portion which eventually becomes an inner layer of a two-color molded article (two-color container). The multilayer container may include only two layers, an inner layer and an outer layer, but may have other layer(s), and the inner layer may not be the innermost layer of the multilayer container. The xylylenediamine-based polyamide resin to be contained in the composition for forming an inner layer is the same as the xylylenediamine-based polyamide resin described in the section of the multilayer container. In addition, the composition for forming an inner layer containing the polyamide resin may contain a component other than the xylylenediamine-based polyamide resin, and details thereof are the same as those of the other components described in the section of the inner layer (polyamide resin layer). Further, the mass ratio of respective constitutional components of the inner layer (polyamide resin layer) and the mass ratio of the polyamide resin contained in the composition for forming an inner layer are also the same as those in the contents described in the section of the inner layer (polyamide resin layer).

The inner layer preform 1 is generally molded by injecting a composition for forming an inner layer containing a xylylenediamine-based polyamide resin into a mold for the inner layer (not illustrated). The injection temperature of the composition for forming an inner layer (injection cylinder temperature on inner layer side) is preferably the injection temperature of the composition for forming an outer layer (injection cylinder temperature on outer layer side) + (from 5 to 40)°C, more preferably the injection cylinder temperature on outer layer side + (from 5 to 35)°C, and even more preferably the injection cylinder temperature on outer layer side + (from 10 to 30)°C.

Because the outer layer preform in the present embodiment is molded by two-color molding, molding is conducted in the same injection molding machine. In addition, generally, the outer layer preform is formed on the outside of the inner layer preform 1 before the inner layer preform 1 is completely cooled and solidified.

More specifically, in the embodiment illustrated in FIG. 1, a mold for forming an outer layer preform 2 is placed on the outside of the inner layer preform 1 in the two-color molding apparatus (FIG. 1 (b)). Then, a composition for forming an outer layer 3 is injected between the inner layer preform 1 and the mold for forming an outer layer preform 2. The composition for forming an outer layer containing a polyolefin resin makes a part which eventually becomes the outer layer of the two-color molded article (two-color container). However, as described above, the multilayer container may be composed of only two layers of an inner layer and an outer layer, but may have other layer(s), and the outer layer may not be the outermost layer of the multilayer container. The polyolefin resin contained in the composition for forming an outer layer is the same as the polyolefin resin described in the section of the multilayer container. In addition, the composition for forming an outer layer containing the polyolefin resin may contain a component/components other than the polyolefin resin, and details thereof are also the same as those of the other components described in the section of the outer layer. Further, the mass ratio of respective constitutional components of the outer layer (polyolefin resin layer) and the mass ratio of the polyolefin resin contained in the composition for forming an outer layer are also the same as those in the content described in the section of the outer layer.

In the state of the two-layer preform, the average thicknesses of the portions (two layers) of becoming the body portions of the multilayer containers are generally about from 2.0 to 7.0 mm, further about from 2.5 to 6.0 mm, and particularly about from 2.5 to 5.5 mm.

In the present embodiment, the thickness ratio between the outer layer and the inner layer is particularly preferred if it is from 6.5:3.5 to 7.5:2.5. With such a ratio, a two-layer preform having more excellent performance can be obtained.

In the present embodiment, as described above, a composition for forming an outer layer 3 is injected between the inner layer preform 1 and the mold for forming an outer layer preform 2.

The composition for forming an outer layer 3 is preferably injected from a position below the inner layer preform 1 (generally on the side opposite to the opening of the multilayer container). At this time, the composition for forming an outer layer 3 is in a melting state.

The injection temperature of the composition for forming an outer layer 3 (injection cylinder temperature on outer layer side) is preferably the melting point of the polyolefin resin contained in the composition for forming an outer layer 3 + from 50 to 140°C, and more preferably the melting point of the polyolefin resin + from 60 to 120°C. When the injection temperature is in the range, blow moldability tends to further improve.

When the composition for forming an outer layer 3 is injection-molded, the temperature of the inner layer preform 1 is preferably the temperature of the composition for forming an outer layer 3 - 150 to 210°C, and more preferably the temperature of the composition for forming an outer layer 3 - 170 to 190°C. When the temperature is in the range, preheating before blow molding tends to be shortened.

In the two-layer preform thus obtained, the inner layer preform 1 and the outer layer preform 4 are in contact with each other.

In the two-layer preform, for a thickness of the outer layer preform, the average thickness of the portions of becoming the body portions of the multilayer containers are preferably 1.5 mm or more, more preferably 2.0 mm or more, may be 2.8 mm or more, in addition, preferably 6.0 mm or less, and more preferably 5.0 mm or less.

In the two-layer preform, for a thickness of the inner layer preform, the average thickness of the portions of becoming the body portions of the multilayer containers are preferably 0.7 mm or more, more preferably 1.0 mm or more, in addition, preferably 3.0 mm or less, and more preferably 2.0 mm or less.

Next, the method for producing the multilayer container of the present embodiment will be described.

In the method for producing the multilayer container of the present embodiment, it is preferable to include performing a two-color molding of an inner layer preform and an outer layer preform to produce a two-layer preform by injecting a composition for forming an outer layer, the composition containing a polyolefin resin, between an inner layer preform and a mold for forming an outer layer preform, the inner layer preform containing a polyamide resin, and the mold positioned outside the inner layer preform, and further performing a blow molding of the two-layer preform, in which the polyamide resin includes a xylylenediamine-based polyamide resin containing a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

By performing two-color molding in this manner, a multilayer container can be produced without any adhesive layer between the polyamide resin layer and the polyolefin resin layer. The process up to the production of a two-layer preform is the same as that of a method for producing the two-layer preform.

A known technique can be employed for blow molding the two-layer preform. For example, the blow molding is preferably performed by biaxial drawing blow molding. Still, when the two-layer preform is molded by biaxial drawing blow molding, it is preferable to heat the preform to the injection temperature of the composition for forming an outer layer (injection cylinder temperature on outer layer side) + (from 1 to 50°C) (preferably injection cylinder temperature on outer layer side + (from 4 to 40°C), more preferably, injection cylinder temperature on outer layer side + (from 10 to 30°C)), as the temperature of heating preform. In addition, it is preferable that the two-layer preform is preferably heated to from 90 to 120°C, and more preferably from 95 to 115°C. Further, in the biaxial drawing blow molding, it is preferable that the primary blow pressure is preferably from 0.5 to 2.0 MPa, more preferably from 0.5 to 1.2 MPa, and the secondary blow pressure is preferably from 1.0 to 5.00 MPa, more preferably from 1.5 to 4.5 MPa. Thereby, the occurrence of thickness unevenness and drawing unevenness is suppressed, and a multilayer container having excellent strength can be obtained.

Examples

The present invention will next be described in more detail with reference to Examples. Materials, amounts used, proportions, processing details, and processing procedures described in the following Examples can be appropriately changed without departing from the spirit of the present invention. Thus, the scope of the present invention is not limited to the specific examples described below.

When a measuring device used in the Examples is not readily available due to, for example, discontinuation, another device with equivalent performance can be used for measurement.

1. Raw Material

PP: polypropylene resin, manufacturer: LCY Chemical, product number: Globalene 8681, melting point: about

**EP 4 474 127 A1**

130°C, melt flow rate (MFR) measured under conditions of 230°C, 2.16 kgf in accordance with ASTM D1238 is 230 g/10 min.

Synthesis of MXD6 (relative viscosity of 2.4)

In a jacketed reactor equipped with an agitator, a partial condenser, a cooler, a thermometer, a dripping tank, and a nitrogen gas introduction tube, adipic acid was placed, inside of the reactor was sufficiently purged with nitrogen, and the adipic acid was heated and melted at 170°C. Then, while the contents were agitated and while m-xylylenediamine (MXDA, available from Mitsubishi Gas Chemical Company, Inc.) was gradually added dropwise in a manner that the molar ratio of the m-xylylenediamine to the adipic acid became 0.994 (diamine/dicarboxylic acid), the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.
The melting point of the resulting resin was 237°C.

Synthesis of MXD10 (relative viscosity of 2.1)

In a jacketed reactor equipped with an agitator, a partial condenser, a cooler, a thermometer, a dripping tank, and a nitrogen gas introduction tube, sebacic acid (available from CASDA) was placed, inside of the reactor was sufficiently purged with nitrogen, and the sebacic acid was heated and melted at 170°C. Then, while the contents were agitated and while m-xylylenediamine (MXDA, available from Mitsubishi Gas Chemical Company, Inc.) was gradually added dropwise in a manner that the molar ratio of the m-xylylenediamine to the sebacic acid became 1:1, the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.
The melting point of the resulting resin was 190°C.

Measurement of Melting Point

Melting point (Tm) was measured as the temperature at which an endothermic peak reaches its maximum during a temperature increase, observed by a differential scanning calorimetry (DSC) method.
For the measurement, a differential scanning calorimeter was used to determine the melting point from a temperature at which the observed endothermic peak reached a maximum peak when around 5 mg of a sample was heated and heated to melt from room temperature to a temperature equal to or higher than the expected melting point at a temperature increase rate of 10°C/min while nitrogen was streamed at 30 mL/min as an atmosphere gas.
For the differential scanning calorimeter, "DSC-60" available from Shimadzu Corporation was used.

Example 1

Production of Bottle

The polyamide resin composition was produced by dry blending 100 ppm by mass of calcium stearate with 100 parts by mass of the polyamide resin presented in Table 1.
By using a two-color molding injection stretch blow molding machine (available from NISSEI ASB MACHINE CO., LTD.) having two injection cylinders, the polyamide resin composition was injected from one injection cylinder to form a polyamide resin layer (inner layer), and then the polypropylene resin was injected from the other injection cylinder to form a polyolefin resin layer (outer layer), thereby obtaining a two-layer preform. The resulting two-layer preform was reheated and subjected to biaxial drawing blow molding to obtain a two-layer bottle. The molding conditions for two-layer bottle are as follows:

Body thickness of preform of outer layer: 3.3 mm
Body thickness of preform of inner layer: 1.4 mm
Injection cylinder temperature on outer layer side: 240°C
Injection cylinder temperature on inner layer side: 260°C

Heating temperature before blow molding: 260°C
Primary blow pressure: 1.0 MPa
Secondary blow pressure: 3.2 MPa

In the resulting bottle, the body thicknesses were 0.39 mm for the outer layer and 0.14 mm for the inner layer, the mass was 28 g, and the inner volume was 350 mL.

By using the resulting bottles, the following evaluations were executed.

Oxygen Barrier Property

The resulting bottles were filled with 100 mL of 50 mL water, and under conditions of an oxygen partial pressure of 0.21 atm, a bottle internal humidity of 100% RH (relative humidity), an external humidity of 50% RH (relative humidity), and a temperature of 23°C, nitrogen at 1 atm was circulated inside the bottle at 20 mL/min, and the amount of oxygen contained in the nitrogen after circulating inside the bottle for 24 hours was detected using a coulometric sensor, and thereby the oxygen transmittance rate was measured. The unit was expressed in cc/(pkg·day).

For the measurement of oxygen transmittance rate, an oxygen transmittance rate measuring device (product name "OX-TRAN 2/61", available from MOCON Inc.) was used.

External Volume Retention Rate during Moisture Absorption

The resulting bottle was allowed to stand at 50°C under 90% relative humidity for 30 days. The external volume of the bottle was measured before and after the test to calculate the retention rate. The external volume was confirmed from an increased amount of water when the bottle was immersed in a 300 mL of water in a 1 L graduated cylinder.

Retention (Unit %) = [External volume of bottle after test/External volume of bottle before test] × 100

Falling Test

The resulting bottle was filled with water of 350 mL, the body portion was held with both hands, the hands were gently released at a position of 80 cm height, and the bottle was vertically fallen so that the bottom portion of the bottle came into contact with the ground, and the presence or absence of cracks was confirmed.

Example 2

In Example 1, the type of polyamide resin was changed, and others were performed in the same manner, as presented in Table 1. The injection cylinder temperature of the polyamide tree (MXD10) used in Example 2 was 260°C.

Comparative Example 1

Production of Bottle

Using an injection stretch blow molding machine (available from NISSEI ASB MACHINE CO., LTD.) having one injection cylinder, polypropylene resins were injected from the injection cylinder to obtain preforms. The resulting preform was reheated and blow-molded to obtain a monolayer bottle. The molding conditions of the monolayer bottle were as follows:

Body thickness of preform: 4.7 mm
Injection cylinder temperature: 240°C
Heating temperature before blow molding: 280°C
Primary blow pressure: 1.0 MPa
Secondary blow pressure: 3.2 MPa

In the resulting bottle, the thicknesses of the body portion were 0.39 mm for the outer layer and 0.14 mm for the inner layer, the mass was 28 g, and the inner volume was 350 mL.

The resulting bottle was used to execute the evaluation as in Example 1.

Comparative Example 2

Production of Bottle

The polyamide resin composition was produced by dry blending 100 ppm by mass of calcium stearate with 100 parts by mass of the polyamide resin presented in Table 1.

Using an injection stretch blow molding machine (available from NISSEI ASB MACHINE CO., LTD.) having one injection cylinder, the polyamide resin composition was injected from the injection cylinder to obtain a preform. The resulting preform was reheated and blow-molded to obtain a monolayer bottle. The molding conditions of the monolayer bottle were as follows:

Body thickness of preform: 4.7 mm
Injection cylinder temperature: 260°C
Heating temperature before blow molding: 280°C
Primary blow pressure: 1.0 MPa
Secondary blow pressure: 3.2 MPa

In the resulting bottle, the body thicknesses were 0.39 mm for the outer layer, 0.14 mm for the inner layer, the mass was 28 g, and the inner volume was 350 mL.

The resulting bottle was used to execute the evaluation as in Example 1.

Comparative Example 3

In Comparative Example 2, the injection cylinder temperature was 260°C, the blow molding temperature was 280°C., the type of polyamide resin was changed, and the other conditions were the same, as presented in Table 1.

[Table 1]

| | | Example 1 | Example 2 | Comparative Example 1 | Comparative Example 2 | Comparative Example 3 |
|---|---|---|---|---|---|---|
| Outer layer resin | | PP | PP | PP monolayer | MXD6 mono-layer | MXD10 mono-layer |
| Inner layer resin | | MXD6 | MXD10 | | | |
| Relative viscosity of polyamide resin | | 2.4 | 2.1 | | 2.4 | 2.1 |
| Thickness ratio (outer layer/inner layer) | | 7/3 | 7/3 | - | - | - |
| Oxygen barrier property | cc/pkg·day | $7.8\times10^{-3}$ | $3.5\times10^{-2}$ | 0.77 | $8.8\times10^{-4}$ | $4.1\times10^{-3}$ |
| External volume retention rate during moisture absorption | % | 95.9 | 99.0 | 99.5 | 92.0 | 81.9 |
| Falling test | Presence of crack | No | No | No | Yes | No |

As is clear from the above results, the multilayer container of the present invention was excellent in oxygen barrier properties and higher in external volume retention during moisture absorption, i.e., excellent in dimensional change rate. Furthermore, there was no cracking after the falling test.

Reference Signs List

1    Inner layer preform
2    Mold for outer layer preform
3    Composition for forming outer layer
4    Outer layer preform

**Claims**

1. A multilayer container, comprising a two-color molded article comprising an outer layer comprising a polyolefin resin and an inner layer comprising a polyamide resin and being in contact with the outer layer; the polyamide resin comprising a xylylenediamine-based polyamide resin comprising a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

2. The multilayer container according to claim 1, wherein a difference between a melting point of the polyolefin resin measured in accordance with differential scanning calorimetry and a melting point of the xylylenediamine-based polyamide resin measured in accordance with differential scanning calorimetry is from 20 to 120°C.

3. The multilayer container according to claim 1 or 2, wherein the polyolefin resin comprises a polypropylene resin.

4. The multilayer container according to any one of claims 1 to 3, wherein a thickness ratio between the outer layer and the inner layer (outer layer:inner layer) is from 6:4 to 9:1.

5. A method for producing a two-layer preform, comprising

   performing a two-color molding of an inner layer preform and an outer layer preform by injecting a composition for forming an outer layer comprising a polyolefin resin, between the inner layer preform comprising a polyamide resin and a mold for forming an outer layer preform and positioned outside the inner layer preform, wherein the polyamide resin comprises a xylylenediamine-based polyamide resin comprising a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

6. A method for producing a multilayer container,

   comprising performing a two-color molding of an inner layer preform and an outer layer preform to produce a two-layer preform by injecting a composition for forming an outer layer and comprising a polyolefin resin, between the inner layer preform and a mold for forming an outer layer preform, the inner layer preform comprising a polyamide resin, and the mold positioned outside the inner layer preform, and further performing a blow molding of the two-layer preform, wherein the polyamide resin comprises a xylylenediamine-based polyamide resin comprising a diamine-derived structural unit and a dicarboxylic acid-derived structural unit, 70 mol% or more of the diamine-derived structural units being derived from xylylenediamine, and 70 mol% or more of the dicarboxylic acid-derived structural units being derived from an $\alpha,\omega$-linear aliphatic dicarboxylic acid having from 4 to 20 carbon atoms.

FIG. 1

EP 4 474 127 A1

# INTERNATIONAL SEARCH REPORT

International application No.

**PCT/JP2022/045481**

## A. CLASSIFICATION OF SUBJECT MATTER

*B29C 45/16*(2006.01)i; *B29C 49/06*(2006.01)i; *B29C 49/22*(2006.01)i; *B32B 27/00*(2006.01)i; *B32B 27/08*(2006.01)i; *B32B 27/32*(2006.01)i; *B65D 1/00*(2006.01)i

FI:    B65D1/00 111; B32B27/00 H; B32B27/08; B32B27/32 D; B29C49/22; B29C49/06; B29C45/16

According to International Patent Classification (IPC) or to both national classification and IPC

## B. FIELDS SEARCHED

Minimum documentation searched (classification system followed by classification symbols)

B29C45/16; B29C49/06; B29C49/22; B32B27/00; B32B27/08; B32B27/32; B65D1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 10-81372 A (NIPPON SANSO KK) 31 March 1998 (1998-03-31) paragraph [0038], fig. 8 | 1-4 |
| A | | 5-6 |
| Y | WO 2017/057463 A1 (MITSUBISHI GAS CHEMICAL CO., INC.) 06 April 2017 (2017-04-06) paragraphs [0034]-[0037], [0049], claims 1, 3, 7-8 | 1-4 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **27 December 2022** | **24 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

16

**INTERNATIONAL SEARCH REPORT**
Information on patent family members

| | International application No. |
|---|---|
| | **PCT/JP2022/045481** |

| Patent document cited in search report | Publication date (day/month/year) | Patent family member(s) | Publication date (day/month/year) |
|---|---|---|---|
| JP 10-81372 A | 31 March 1998 | EP 827708 A1 column 18, line 33 to column 19, line 5, fig. 8 CN 1181225 A | |
| WO 2017/057463 A1 | 06 April 2017 | US 2018/0273231 A1 paragraphs [0103]-[0110], [0141], claims 1, 3, 7-8 EP 3357690 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009065923 A
- WO 2011038886 A
- JP 2021080025 A
- JP 2014068767 A
- JP H5317411 A
- WO 2017057463 A
- JP 2018165298 A
- WO 2021177126 A
- JP 2011132550 A
- JP 2011037199 A